# EUROPÄISCHE PATENTANMELDUNG

(11) **EP 0 930 193 A2**
(43) Veröffentlichungstag der Anmeldung: **21.07.1999**
(21) Anmeldenummer: 99100543.0
(22) Anmeldetag: 13.01.1999
(51) Int. Cl.: B60K 41/28

(54) **Verfahren zum Steuern eines Antriebssytems eines Kraftfahrzeuges mit Schwung-Nutz-Automatik (SNA)**

(30) Priorität: 19.01.1998 DE 19801792
(71) Anmelder: Volkswagen Aktiengesellschaft, 38436 Wolfsburg (DE)
(72) Erfinder: Trautmann, Wilhelm, 38547 Calberlah (DE); Miersch, Rainer Dipl.-Ing., 38471 Rühen (DE)

(57) **Zusammenfassung**

Die vorliegende Erfindung betrim ein Verfahren und ein Kraftfahrzeug mit einem Antriebssystems, welches in Abtriebsrichtung folgendes aufweist, ein Antriebsaggregat (10), eine erste Kupplung (12), einen Startergenerator (14), eine zweite Kupplung (16), eine Antriebswelle (18), ein Getriebe (20) und eine Abtriebswelle (22), welche insbesondere über ein Differentialgetriebe (24) mit Antriebsrädern (26) verbunden ist. Hierbei ist eine Steuervorrichtung (28) vorgesehen, welche eine Rollphase des Kraftfahrzeuges mit abgeschaltetem Antriebsaggregat (10) erkennt und in derartigen Phasen den Startergenerator (14) über die zweite Kupplung (16) und das Getriebe (20) mit den sich drehenden Antriebsrädern (26) verbindet und permanent ein Übersetzungsverhältnis des Getriebes (20) derart einstellt, daß sich eine vorbestimmte Abtriebswellendrehzahl n_{Abtriebswelle} ergibt.

## Beschreibung

Die Erfindung betrifft ein Verfahren zum Steuern eines Antriebssystems eines Kraftfahrzeuges mit Schwung-Nutz-Automatik (SNA), wobei das Antriebssystems in Abtriebsrichtung folgendes aufweist, ein Antriebsaggregat, eine erste Kupplung, einen Startergenerator, eine zweite Kupplung, eine Antriebswelle, ein Getriebe und eine Abtriebswelle, welche insbesondere über ein Differentialgetriebe mit Antriebsrädem verbunden ist, gemäß dem Oberbegriff des Anspruchs 1. Die Erfindung betrifft femer ein Kraftfahrzeug mit einem Antriebssystems, welches in Abtriebsrichtung folgendes aufweist, ein Antriebsaggregat, eine erste Kupplung, einen Startergenerator, eine zweite Kupplung, eine Antriebswelle, ein Getriebe und eine Abtriebswelle, welche insbesondere über ein Differentialgetriebe mit Antriebsrädern verbunden ist, gemäß dem Oberbegriff des Anspruchs 6.

Bei Kraftfahrzeugen mit Motorabschaltsystem, wie einer SNA, wird bei entlastetem Fahrpedal bzw. Gaspedal der Motor in Rollphasen vom Getriebe getrennt und abgeschaltet. Da jedoch ggf. in Betrieb befindliche elektrische Verbraucher weiterhin betrieben werden müssen, kommt es bei derartigen Motorabschaltsystemen häufig zu einer negativen Ladebilanz der Bordbatterie. Dadurch kommt es wegen einer erhöhten Belastung ggf. zu einem schnelleren Altern der Bordbatterie. Ferner muß zum Sicherstellen einer ausreichenden Stromversorgung auch in Rollphasen bei abgeschaltetem Motor das Bordnetz entsprechend dimensioniert werden.

Aus der US 5 400 596 ist ein Antriebssystem bekannt, bei dem ein Gleichstrom-Antriebsgenerator zwischen zwei Kupplungen im Antriebsstrang angeordnet ist und in Bremsphasen als zusätzliche Bremse mit Bremsenergierückgewinnung verwendet wird.

Die DE 29 43 554 A1, DE-OS 24 00 760 und DE 44 46 485 A1 beschreiben Hybrid-Antriebe für ein Kraftfahrzeug mit einer Elektromaschine, welche zwischen zwei Trennkupplungen im Antriebsstrang angeordnet ist. In Bremsphasen wird die Elektromaschine als zusätzliche generatorische Bremse verwendet und ggf. Generatorstrom in eine Bordbatterie gespeist.

Die DE 42 04 384 C2 beschreibt ein Fahrzeug mit einem Hybrid-Antrieb mit einer Wärmekraftmaschine und einer Wahlweise als Motor oder Generator verwendbaren Elektromaschine, welche in bestimmten automatischen Schaltstellungen bei abgeschalteter Wärmekraftmaschine sowohl im generatorischen Betrieb als auch im Motorbetrieb mit einem Triebwellenstrang antriebswirksam verbunden ist.

Der vorliegenden Erfindung liegt die Aufgabe zugrunde, ein verbessertes Verfahren und Kraftfahrzeug der obengenannten Art zur Verfügung zu stellen, wobei die obengenannten Nachteile überwunden werden und eine kinetische Energie eines Fahrzeuges beim Rollen und Bremsen optimal zu einer Bordnetzversorgung nutzbar ist.

Diese Aufgabe wird erfindungsgemäß durch ein Verfahren der o.g. Art mit den in Anspruch 1 gekennzeichneten Merkmalen und durch ein Kraftfahrzeug der o.g. Art mit den in Anspruch 6 gekennzeichneten Merkmalen gelöst. Vorteilhafte Ausgestaltungen der Erfindung sind in den abhängigen Ansprüchen angegeben.

Dazu ist es bei einem Verfahren erfindungsgemäß vorgesehen, daß zur Stromerzeugung in Rollphasen des Kraftfahrzeuges, in denen das Antriebsaggregat abgestellt ist, der Startergenerator über die zweite Kupplung und das Getriebe mit den sich drehenden Antriebsrädern verbunden wird, wobei durch permanentes Steuern eines Übersetzungsverhältnisses des Übersetzungsgetriebes eine vorbestimmte Abtriebswellendrehzahl und somit eine vorbestimmte Stromerzeugung durch den Startergenerator aufrecht erhalten wird.

Dies hat den Vorteil, daß eine kinetische Energie des rollenden Kraftfahrzeuges zur Stromerzeugung verwendet wird und gleichzeitig eine ausgeglichene Bordbatterieladebilanz trotz abgestelltem Antriebsaggregat durch ständige Anpassung der Abtriebswellendrehzahl in optimaler Weise erzielt wird.

Eine optimale Anpassung an unterschiedlichste Betriebszustände wird dadurch erreicht, daß die vorbestimmte Abtriebswellendrehzahl in Abhängigkeit von Betriebszuständen elektrischer Verbraucher und/oder einem Ladezustand einer Bordbatterie gewählt wird.

Rollbetriebsphasen mit abgestelltem Antriebsaggregat, in denen ein Generatorbetrieb nicht sinnvoll möglich ist, beispielsweise bei Rollen unterhalb vorbestimmter Geschwindigkeiten, wird dadurch Rechnung getragen, daß die zweite Kupplung während der Rollphase nicht geschlossen oder wieder gelöst wird, wenn auch durch Verstellen des Übersetzungsverhältnisses des Getriebes die vorbestimmte Abtriebswellendrehzahl nicht erreichbar ist.

Wenn das Getriebe ein Handschaltgetriebe ist, wird in vorteilhafter Weise zum Aufrechterhalten einer vorbestimmten Drehzahl der Antriebswelle für eine vorbestimmte Stromerzeugung durch den Startergenerator eine Schaltempfehlung, beispielsweise optisch mittels einer Signallampe, gegeben, so daß eine entsprechende manuelle Steuerung des Übersetzungsverhältnisses des Getriebes erfolgt.

Wenn das Getriebe ein stufenloses Getriebe oder ein automatisch schaltendes Getriebe ist, erfolgt zum Aufrechterhalten einer vorbestimmten Drehzahl der Antriebswelle für eine vorbestimmte Stromerzeugung durch den Startergenerator eine automatische Übersetzungsregelung bzw. eine automatische Schaltregelung.

Bei einem Kraftfahrzeug ist erfindungsgemäß eine Steuervorrichtung vorgesehen, welche eine Rollphase des Kraftfahrzeuges mit abgeschaltetem Antriebsaggregat erkennt und in derartigen Phasen den Startergenerator über die zweite Kupplung und das Getriebe mit den sich drehenden Antriebsrädern verbindet und permanent ein Übersetzungsverhältnis des Getriebes derart einstellt, daß sich eine vorbestimmte Abtriebswellendrehzahl ergibt.

Dies hat den Vorteil, daß eine kinetische Energie des rollenden Kraftfahrzeuges zur Stromerzeugung verwendet wird und gleichzeitig eine ausgeglichene Bordbatterieladebilanz trotz abgestelltem Antriebsaggregat durch ständige Anpassung der Abtriebswellendrehzahl in optimaler Weise erzielt wird.

Eine optimale Anpassung an unterschiedlichste Betriebszustände wird dadurch erreicht, daß die vorbestimmte Abtriebswellendrehzahl in Abhängigkeit von Betriebszuständen elektrischer Verbraucher und/oder einem Ladezustand einer Bordbatterie gewählt ist.

Rollbetriebsphasen mit abgestelltem Antriebsaggregat, in denen ein Generatorbetrieb nicht sinnvoll möglich ist, beispielsweise bei Rollen unterhalb vorbestimmter Geschwindigkeiten, wird dadurch Rechnung getragen, daß die Steuervorrichtung die zweite Kupplung während der Rollphase nicht schließt oder wieder löst, wenn auch durch Verstellen des Übersetzungsverhältnisses des Getriebes die vorbestimmte Abtriebswellendrehzahl nicht erreichbar ist.

Wenn das Getriebe ein Handschaltgetriebe ist, gibt die Steuervorrichtung zum Aufrechterhalten einer vorbestimmten Drehzahl der Antriebswelle für eine vorbestimmte Stromerzeugung durch den Startergenerator eine Schaltempfehlung, beispielsweise optisch mittels einer Signallampe, ab, so daß eine entsprechende manuelle Steuerung des Übersetzungsverhältnisses des Getriebes erfolgt.

Wenn das Getriebe ein stufenloses Getriebe oder ein automatisch schaltendes Getriebe ist, stellt die Steuervorrichtung zum Aufrechterhalten einer vorbestimmten Drehzahl der Antriebswelle für eine vorbestimmte Stromerzeugung durch den Startergenerator eine Übersetzung bzw. eine Schaltung automatisch ein.

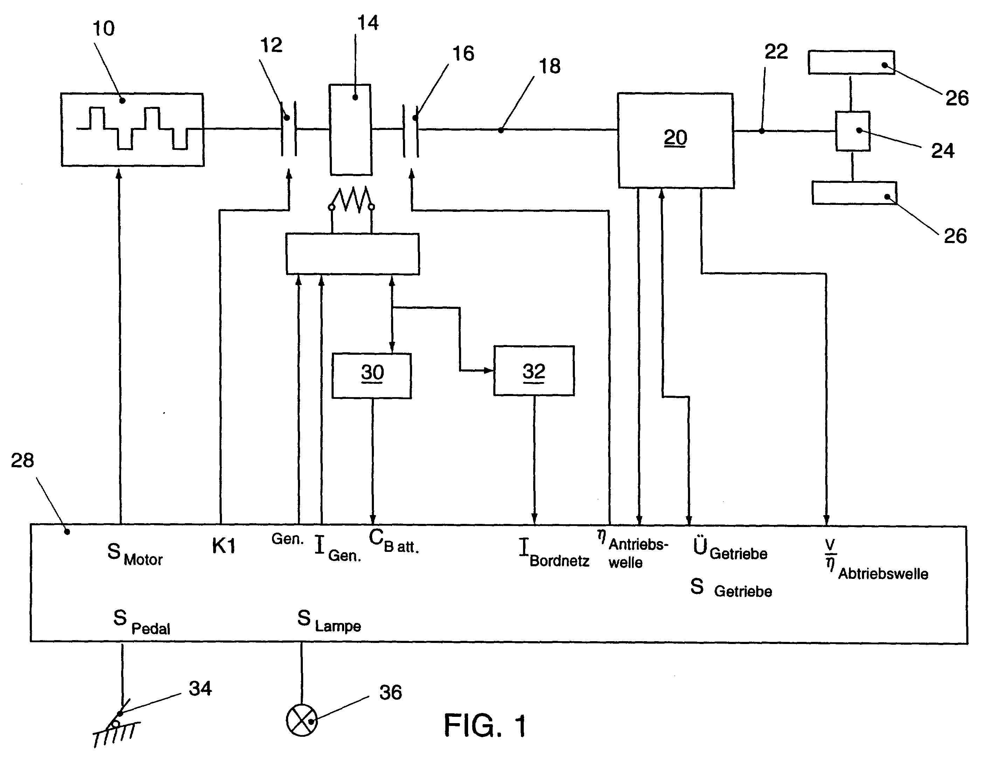

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt ein schematisches Blockschaltbild eines Triebstranges in einem erfindungsgemäßen Kraftfahrzeug.

Im Antriebsstrang ist in Abtriebsrichtung gesehen folgendes angeordnet, ein Antriebsaggregat 10, eine erste Kupplung 12, ein Startergenerator 14, eine zweite Kupplung 16, eine Antriebswelle 18, ein Getriebe 20 und eine Abtriebswelle 22, welche insbesondere über ein Differentialgetriebe 24 mit Antriebsrädern 26 verbunden ist.

Eine Steuervorrichtung 28 ist zum Erkennen von Rollphasen mit abgeschaltetem Antriebsaggregat 10 sowie zum Entscheiden, ob ein Generatorbetrieb mit Regelung eines Übersetzungsverhältnisses des Getriebes 20 erfolgt oder nicht, vorgesehen und empfängt folgende Signale: Einen Batterieladezustand C_{Batt} von einer Batterie 30, einen Gesamtstrom I_{Bordnetz} aus einem Bordnetz 32, welcher entsprechend einer Anzahl von eingeschalteten oder abgeschalteten Verbrauchem höher oder niedriger ist, ein Verhältnis von Fahrgeschwindigkeit zu Abtriebswellendrehzahl v/n_{Abtriebswelle} aus dem Getriebe 20, eine Antriebswellendrehzahl n_{Antriebswelle} von der Antriebswelle 18, eine Stellung des Getriebes 20 bzw. eines momentan eingelegten Ganges Ü_{Getriebe} aus dem Getriebe 20, welche bzw. welcher einem momentanen Übersetzungsverhältnis entspricht, und ein Bremspedalsignal S_{Pedal} von einem Bremspedal 34.

Ferner steuert bzw. regelt die Steuervorrichtung 28 den Antriebsstrang mit folgenden Ausgangssignalen: In der dargestellten Ausführungsform ist die Steuervorrichtung in ein Steuergerät für die Motorabschaltung (SNA) und das Getriebe 20 integriert, so daß ein Motorsignal S_{Motor} zum wahlweisen Abstellen des Antriebsaggregats 10 abgebar ist. Ein Signal K1 steuert die erste Kupplung 12, ein Generatorsignal Gen. dient zum Setzten des Startergenerators 14 auf Motor- oder Generatorbetrieb, ein Generatorstromsignal I_{Gen} dient zum Vorbestimmen eines vom Startergenerator im Generatorbetrieb erzeugten Stromes für das Bordnetz 32, ein Signal K2 dient zum Steuern der zweiten Kupplung K2, ein Getriebestellsignal S_{Getriebe} dient zum einstellen eines Übersetzungsverhältnisses des Getriebes 20 und ein optionales Lampensignal S_{Lampe} dient zum wahlweise Ein- oder Ausschalten einer optionalen Lampe 36.

Das Getriebestellsignal S_{Getriebe} ist nur bei einem stufenlosen Getriebe, sogn. CVT-Getrieben, zum Verstellen von Variatoren oder bei einem automatisch schaltendem Getriebe, zum automatischen Ausführen eines Gangwechsels, vorgesehen, während die Lampe 36 dazu dient, einen Fahrer auf einen erforderlichen Schaltvorgang bei einem rein manuell betätigbaren Getriebe aufmerksam zu machen.

Bei nicht betätigtem Gaspedal wird erst die zweite Kupplung K2 16 geöffnet, dann die erste Kupplung K1 12 geöffnet und das Antriebsaggregat 10 abgeschaltet. Das Fahrzeug rollt im freien Lauf ohne Motorbremswirkung aus. Da dem Startergenerator 14 nun ein Antrieb durch das Antriebsaggregat 10 fehlt, erzeugt dieser keinen Strom und das Bordnetz 32 wird ausschließlich aus der Bordbatterie 30 gespeist. Es kommt zu einer negativen Ladebilanz der Bordbatterie, d.h. diese entlädt sich. Bei länger andauemder Rollphase und ausreichender Fahrzeuggeschwindigkeit v, d.h. bei genügend größer Abtriebswellendrehzahl n_{Abtriebswelle} entscheidet die Steuervorrichtung 28 ggf. auch in Abhängigkeit von einem Ladezustand der Bordbatterie 30 und von einem Schaltzustand von elektrischen Verbrauchem im Bordnetz 32, welcher durch den Bordnetzstrom I_{Bordnetz} abgreifbar ist, daß die Kupplung K2 16 geschlossen und der Startergenerator in den Generatorbetrieb versetzt wird. Hierzu wird ein Generatorstrom I_{Gen} von der Steuervorrichtung 28 abhängig von C_{Batt} und/oder I_{Bordnetz} derart vorbestimmt, daß das Bordnetz 32 ausreichend mit elektrischer Energie versorgt und ggf. bei stark entleerter Bordbatterie 30 zusätzlich und soweit möglich ein Überschuß zu deren Aufladung erzeugt wird. Dazu wird die Drehzahl des Generators mittels einer Variation der Getriebeübersetzung über S_{Getriebe} ständig angepaßt, soweit dies die Fahrzeuggeschwindigkeit, d.h. die Abtriebswellendrehzahl n_{Abtriebswelle} dies zulassen.

In dem Falle, daß S_{Pedal} eine Betätigung des Bremspedals 34 signalisiert, wird ein maximaler Generatorstrom vorbestimmt, so daß der Generator 14 zusätzlich als Bremse dient und in gewissem Umfang eine Energierückgewinnung aus der Umsetzung von kinetischer Energie in Strom erfolgt. Das Bordnetz 32 ist in einer vorteilhaften Weiterbildung derart ausgeweitet, daß beispielsweise in Bremsphasen eine zusätzliche Batterie oder Kondensatoren ggf. kurzfristig und ggf. auf höhere Spannungen aufgeladen werden und anschließend das Bordnetz 32 speisen.

### BEZUGSZEICHENLISTE

- 10: Antriebsaggregat
- 12: erste Kupplung
- 14: Startergenerator
- 16: zweite Kupplung
- 18: Antriebswelle
- 20: Getriebe
- 22: Abtriebswelle
- 24: Differentialgetriebe
- 26: Antriebsrädem
- 28: Steuervorrichtung
- 30: Batterie
- 32: Bordnetz
- 34: Bremspedal
- 36: Lampe

## Patentansprüche

1. Verfahren zum Steuem eines Antriebssystems eines Kraftfahrzeuges mit Schwung-Nutz-Automatik (SNA), wobei das Antriebssystems in Abtriebsrichtung folgendes aufweist, ein Antriebsaggregat, eine erste Kupplung, einen Startergenerator, eine zweite Kupplung, eine Antriebswelle, ein Getriebe und eine Abtriebswelle, welche insbesondere über ein Differentialgetriebe mit Antriebsrädern verbunden ist,
dadurch gekennzeichnet, daß
zur Stromerzeugung in Rollphasen des Kraftfahrzeuges, in denen das Antriebsaggregat abgestellt ist, der Startergenerator über die zweite Kupplung und das Getriebe mit den sich drehenden Antriebsrädern verbunden wird, wobei durch permanentes Steuern eines Übersetzungsverhältnisses des Getriebes eine vorbestimmte Abtriebswellendrehzahl und somit eine vorbestimmte Stromerzeugung durch den Startergenerator aufrecht erhalten wird.

2. Verfahren nach Anspruch 1,
dadurch gekennzeichnet, daß
die vorbestimmte Abtriebswellendrehzahl in Abhängigkeit von Betriebszuständen elektrischer Verbraucher und/oder einem Ladezustand einer Bordbatterie gewählt wird.

3. Verfahren nach Anspruch 1 oder 2,
dadurch gekennzeichnet, daß
die zweite Kupplung während der Rollphase nicht geschlossen oder wieder gelöst wird, wenn auch durch Verstellen des Übersetzungsverhältnisses des Getriebes die vorbestimmte Abtriebswellendrehzahl nicht erreichbar ist.

4. Verfahren nach einem der vorhergehenden Ansprüche,
dadurch gekennzeichnet, daß
das Getriebe ein Handschaltgetriebe ist, wobei zum Aufrechterhalten einer vorbestimmten Drehzahl der Antriebswelle für eine vorbestimmte Stromerzeugung durch den Startergenerator eine Schaltempfehlung, beispielsweise optisch mittels einer Signallampe, gegeben wird, so daß eine entsprechende manuelle Steuerung des Übersetzungsverhältnisses des Getriebes erfolgt.

5. Verfahren nach einem der Ansprüche 1 bis 3,
dadurch gekennzeichnet, daß
das Getriebe ein stufenloses Getriebe oder ein automatisch schaltendes Getriebe ist, wobei zum Aufrechterhalten einer vorbestimmten Drehzahl der Antriebswelle für eine vorbestimmte Stromerzeugung durch den Startergenerator eine automatische Übersetzungsregelung bzw. eine automatische Schaltregelung erfolgt.

6. Kraftfahrzeug mit einem Antriebssystems, welches in Abtriebsrichtung folgendes aufweist, ein Antriebsaggregat (10), eine erste Kupplung (12), einen Startergenerator (14), eine zweite Kupplung (16), eine Antriebswelle (18), ein Getriebe (20) und eine Abtriebswelle (22), welche insbesondere über ein Differentialgetriebe (24) mit Antriebsrädern (26) verbunden ist,
dadurch gekennzeichnet, daß
eine Steuervorrichtung (28) vorgesehen ist, welche eine Rollphase des Kraftfahrzeuges mit abgeschaltetem Antriebsaggregat (10) erkennt und in derartigen Phasen den Startergenerator (14) über die zweite Kupplung (16) und das Getriebe (20) mit den sich drehenden Antriebsrädem (26) verbindet und permanent ein Übersetzungsverhältnis des Getriebes (20) derart einstellt, daß sich eine vorbestimmte Abtriebswellendrehzahl n_{Abtriebswelle} ergibt.

7. Kraftfahrzeug nach Anspruch 6,
dadurch gekennzeichnet, daß
die vorbestimmte Abtriebswellendrehzahl n_{Abtriebswelle} in Abhängigkeit von Betriebszuständen elektrischer Verbraucher (32) und/oder einem Ladezustand C_{Batt} einer Bordbatterie (30) gewählt ist.

8. Kraftfahrzeug nach Anspruch 6 oder 7,
dadurch gekennzeichnet, daß
die Steuervorrichtung (28) die zweite Kupplung (16) während der Rollphase nicht schließt oder wieder löst, wenn auch durch Verstellen des Übersetzungsverhältnisses des Getriebes (20) die vorbestimmte Abtriebswellendrehzahl n_{Abtriebswelle} nicht erreichbar ist.

9. Kraftfahrzeug nach einem der Ansprüche 6 bis 8,
dadurch gekennzeichnet, daß
das Getriebe (20) ein Handschaltgetriebe ist, wobei die Steuervorrichtung (28) zum Aufrechterhalten einer vorbestimmten Drehzahl der Antriebswelle n_{Antriebswelle} für eine vorbestimmte Stromerzeugung I_{Gen} durch den Startergenerator 14 eine Schaltempfehlung, beispielsweise optisch mittels einer Signallampe (34), abgibt, so daß eine entsprechende manuelle Steuerung des Übersetzungsverhältnisses des Getriebes (20) erfolgt.

10. Kraftfahrzeug nach einem der Ansprüche 6 bis 9,
dadurch gekennzeichnet, daß
das Getriebe (20) ein stufenloses Getriebe oder ein automatisch schaltendes Getriebe ist, wobei die Steuervorrichtung (28) zum Aufrechterhalten einer vorbestimmten Drehzahl der Antriebswelle n_{Antriebswelle} für eine vorbestimmte Stromerzeugung I_{Gen} durch den Startergenerator (14) eine Übersetzung bzw. eine Schaltung automatisch einstellt.
